# FASCICULE DE BREVET EUROPEEN

(11) **EP 3 913 360 B1**
(45) Date de publication et mention de la délivrance du brevet: **11.01.2023**
(21) Numéro de dépôt: 21174913.0
(22) Date de dépôt: 20.05.2021
(51) Int. Cl.: G01N 27/22, G01K 1/024, G08B 19/02

(54) **DISPOSITIF DE MESURE DE PARAMÈTRES D'UNE CHAUSSÉE POUR EN DÉTERMINER L'ÉTAT ET PROCÉDÉ DE MESURE**
VORRICHTUNG ZUM MESSEN VON PARAMETERN EINER FAHRBAHN ZUR BESTIMMUNG IHRES ZUSTANDS UND ENTSPRECHENDES MESSVERFAHREN
DEVICE FOR MEASURING PARAMETERS OF A ROAD FOR DETERMINING THE STATUS THEREOF AND MEASUREMENT METHOD

(30) Priorité: 20.05.2020 FR 2005266
(43) Date de publication de la demande: 24.11.2021
(73) Titulaire: Meteo Omnium, 64210 Bidart (FR)
(72) Inventeur: LEBRET, Benoît, 64210 Bidart (FR)
(74) Mandataire: Aquinov

(56) Documents cités:
- EP-A1- 0 248 691
- CN-A- 102 288 650
- FR-A1- 2 859 021
- FR-A1- 2 959 886
- FR-A1- 3 002 664
- US-A- 3 873 927

## Description

L'invention concerne un dispositif de mesure de paramètres d'une chaussée pour en déterminer l'état, épaisseur du film d'eau, état liquide ou solide de l'eau, température de surface et à une profondeur donnée, par exemple.

Dans le domaine routier, il est utile de pouvoir déterminer l'état des routes et surtout des conditions de roulage. Ceci permet d'anticiper en informant par tout moyen les personnes roulant sur lesdites chaussées des conditions dangereuses, d'afficher lesdites conditions, de prévoir par anticipation les traitements de chaussée adéquats, d'afficher éventuellement des itinéraires de déviation.

Les problématiques qui sont posées par les capteurs de chaussée sont très nombreuses car les conditions physico-chimiques auxquelles ils sont soumis, sont très difficiles. Les écarts de température sont très importants, de -20° en plein hiver à +70°C en plein été pour donner un ordre de grandeur. Les surfaces routières sont de plus souillées par les huiles issues de fuites moteur, le carburant issu de fuites et débordements des réservoirs, les liquides de refroidissement ou les fluides hydrauliques, les particules des pots d'échappement, les particules d'usure des organes de freinage, des pneumatiques, ou simplement la boue issue du mélange poussière/terre/eau. Les changements de phase comme l'eau stagnante, de liquide en solide sous forme de glace, provoquent des contraintes importantes.

On connaît un capteur qui permet de déterminer ces paramètres dans ces conditions très difficiles. C'est l'objet du brevet français FR2859021 A1 au nom du même demandeur. Ce document décrit un capteur filaire destiné à être intégré dans une surface, en l'occurrence une chaussée, comprenant au moins deux électrodes de façon à déterminer le taux d'impuretés d'une surface, notamment d'une chaussée. Un tel capteur mesure la tension pour une fréquence donnée, entre deux électrodes et cette mesure est comparée avec les valeurs d'un abaque de façon à déterminer ledit taux d'impuretés en l'occurrence du sel. Ce dispositif mesure aussi la valeur d'autres paramètres tels que la température, la présence d'un film d'eau et intègre des moyens de comparaison avec des données mémorisées sous forme d'abaque afin de pouvoir disposer d'un caractère prédictif. Dès lors que les conditions sont réunies pour créer des conditions dangereuses, par exemple des risques de perte d'adhérence par formation d'un film de glace ou de givre, un message d'alerte est envoyé et relayé. Une solution a été trouvée aux problèmes de perturbations des signaux envoyés en assurant un traitement interne et un envoi des données avec des signaux numériques et non plus analogiques. D'autres capteurs sont connus de CN102288650 A et FR2959886 A1.

Si une telle solution est très satisfaisante, il apparaît utile de lui apporter des perfectionnements pour miniaturiser ce capteur et lui permettre de travailler à travers une connexion sans fil. Ceci aurait l'avantage de ne pas immobiliser la chaussée à la circulation par exemple sur des durées trop longues puisque seul le capteur est à intégrer dans un simple trou borgne et non en plus le câble dans une saignée plus ou moins longue. Lors de la réfection de la bande de roulement d'une chaussée, une fois intégré dans la chaussée et scellé, le capteur de l'art antérieur était soit à extraire préalablement ainsi que le câble de liaison avec replacement en chaussée dudit capteur et de son câble de liaison après l'intervention, ce qui nécessitait une immobilisation de la chaussée relativement longue. Dans le cas d'un capteur sans fil, il suffit de désolidariser le capteur en place, de l'extraire comme le capteur de l'art antérieur puis de conserver le capteur pendant la durée de la réfection de la chaussée et enfin de replacer le capteur en chaussée, mais uniquement le capteur, aucune saignée pour le fil n'étant nécessaire. La compacité envisagé par le capteur perfectionné selon la présente invention permettrait de recourir à des scies cloche du commerce, le diamètre d'encastrement étant par exemple un diamètre bien connu, celui des boîtiers de prises électriques. Pour cette intégration en chaussée, il serait utile de disposer de moyens de réglage de la pose du capteur dans le plan de la chaussée. De tels moyens existent, sont amovibles et réutilisables, mais restent encombrants et il faut les laisser en place en attendant la prise du scellement. Le but de la présente invention serait de doter le capteur de moyens de réglage propres au capteur, de façon à le placer affleurant comme dans l'art antérieur, ceci dans le plan de la chaussée, quelle que soit l'inclinaison de la chaussée par rapport à l'horizontale et quel que soit l'inclinaison du fond du trou borgne.

Un autre problème lié à l'intégration d'un capteur sans fil et sans ouverture possible du fait de l'étanchéité, c'est le nettoyage de sa surface supérieure portant les capteurs. En effet, des dépôts se forment sur la surface du capteur et donc de ses électrodes si bien que, régulièrement c'est-à-dire tous les 6 moins par exemple, il est absolument nécessaire de procéder à un entretien, ce qui est chronophage, coûteux et oblige de nouveau à une neutralisation de la chaussée. La présente invention propose également des moyens d'auto nettoyage, associés à chaque capteur de manière à conserver l'intégrité des mesures et à limiter très fortement les dérives des mesures. Une autre contrainte d'un capteur sans fil est la consommation en énergie qui doit être réduite au maximum puisque la source d'énergie est soit une pile mais avec une durée de vie de plus de 10 ans pour donner un ordre d'idées soit des accus et des moyens de rechargement, intégrés et autonomes.

A cet effet, selon la revendication indépendante 1, le dispositif de mesure de paramètres d'une chaussée réalisée à partir de granulats, pour en déterminer l'état, comprenant un capteur C mesurant des data, comporte un boîtier intégré dans la chaussée, de forme cylindrique avec une face supérieure, une face inférieure et une paroi périphérique, dont la caractéristique est que la face supérieure comportent 2 électrodes, affleurantes avec la face supérieure, générant un espace inter-électrodes et comportant des moyens de transmission sans fil, de façon à pouvoir transférer lesdites data du capteur C sous forme numérique.

Selon l'invention, les moyens de transmission sont sans fil et comprennent, de manière préférentielle, un émetteur intégré au capteur et un récepteur déporté, généralement hors chaussée, et situé dans la zone de réception des signaux dudit émetteur intégré, ledit récepteur étant apte à transférer lesdites data vers un poste de traitement et de centralisation des données.

Le capteur C comporte de préférence des sondes de température intégrées dans le boîtier, à savoir une sonde de température supérieure, affleurant sur la face supérieure du boîtier et une sonde de température inférieure, disposée sous la sonde de température supérieure.

Plus particulièrement, le dispositif de mesure comprend un générateur de signaux, pouvant être modulés en forme, fréquence et amplitude, programmé pour émettre des signaux donnés à des intervalles de temps donnés et ce générateur de signaux est relié à un circuit de mesure.

Encore plus particulièrement, le générateur de signaux et son circuit de mesure, les sondes de température, les électrodes et l'émetteur sont reliés à une interface INT, incluant la programmation des actions de mesure et le pilotage du générateur de signaux.

Selon un perfectionnement du dispositif de mesure selon la présente invention, la face inférieure du boîtier est équipée de moyens de réglages de l'assise du boîtier du capteur C.

Le capteur C du dispositif de mesure selon la présente invention comporte des moyens d'auto nettoyage disposés sur la face supérieure du boîtier comprenant des plots, répartis sur ladite surface supérieure et la surface cumulée de ces plots est préférentiellement comprise entre 30% et 40% de la surface de la face supérieure dudit boîtier.

L'invention couvre aussi, selon la revendication indépendante 11, un procédé de pilotage du dispositif de mesure de paramètres d'une chaussée pour en déterminer l'état, consistant à travailler en tension avec une forme, une fréquence et une amplitude donnée par le générateur de signal.

Lorsqu'une mesure est requise, une tension est émise, avec une forme, une fréquence et une amplitude données par le générateur de signal, le signal, émis avec une fréquence et une amplitude, est modifié par la présence ou non de glace, d'eau ou de givre et/ou de sel, on mesure la capacité parasite induite par la présence de glace, d'eau ou de givre et/ou de taux de sel et, en fonction de la forme de la fréquence et de l'amplitude du signal émis, on compare les mesures des variations induites par la présence de glace, d'eau ou de givre et/ou de sel, en comparaison avec des abaques associés.

La présente invention est maintenant décrite à l'aide d'un exemple uniquement illustratif et nullement limitatif de la portée de l'invention, et à partir des dessins annexés sur lesquels les différentes figures montrent :
[Fig. 1] représente une vue en perspective d'un capteur selon la présente invention.
[Fig. 2] représente une vue en coupe verticale du capteur de la figure 1, mis en place dans la chaussée.
[Fig. 3] représente une vue en coupe du capteur selon la présente invention avec ses moyens d'auto nettoyages sous l'action d'un pneu.

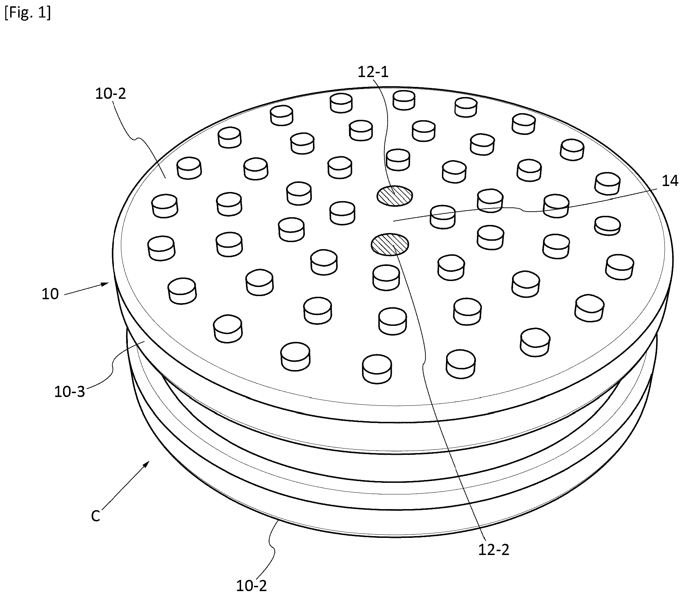

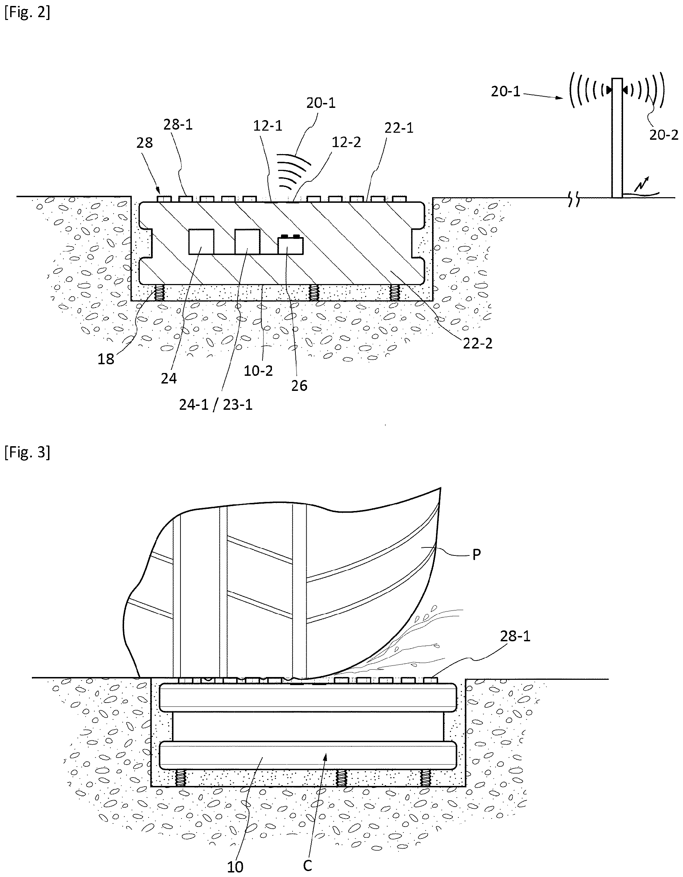

Le dispositif de l'invention illustré sur les figure 1 et 2, comprend un capteur C, intégré dans un boîtier 10 de forme cylindrique avec une face supérieure 10-1, une face inférieure 10-2 et une paroi périphérique 10-3. Pour donner un ordre d'idée des dimensions dudit boîtier, celui-ci possède les dimensions d'une boîte d'encastrement pour connecteurs électriques muraux, tels que des prises ou interrupteurs, c'est-à-dire 67mm. Le boîtier 10 a son volume interne noyé dans une résine, de façon à assurer une étanchéité totale des éléments intégrés dans ledit boîtier. Sur la face supérieure sont présentes 2 électrodes 12-1 et 12-2. Ces électrodes, avantageusement en inox 316L, sont totalement affleurantes avec la face supérieure 10-1, générant un espace inter-électrodes 14. Cet espace inter-électrodes 14 est la distance entre les deux points périphériques de chacune des électrodes qui sont en vis-à-vis, donc la distance minimale entre lesdites deux électrodes. La distance est de l'ordre de 5mm pour fixer les idées. Le diamètre D des électrodes est de l'ordre de 5mm pour donner également un ordre d'idée mais ces valeurs pourraient être choisies différentes, l'adaptation des conditions du signal telles qu'elles seront décrites ci-après, seraient alors ajustées en fonction de cette géométrie.

La face inférieure 10-2 porte des moyens 16 de réglage de l'assise du boitier 10 du capteur C. Ces moyens de réglage de l'assise comprennent des vis 18 dont l'écrou est noyé dans la résine du boîtier 10. Les vis 18 sont apparentes et manoeuvrables de l'extérieur afin de faire plus ou moins saillie en dessous de la face inférieure 10-2, comme cela est bien visible sur la figure 2.

Le capteur C selon la présente invention inclut des moyens de transmission 20 de façon à pouvoir transférer des data sous forme numérique. Ces moyens de transmission sont sans fil et comprennent un émetteur 20-1 et un récepteur 20-2 déporté et situé dans la zone de réception des signaux dudit émetteur 20-1, plus particulièrement en dehors de la chaussée. Ledit récepteur 20-2 peut, à son tour, transférer lesdites data vers un poste de traitement et de centralisation des données en vue de leur traitement. Le récepteur étant hors chaussée peut être alimenté par le réseau.

Le capteur C selon la présente invention, comporte également, des sondes de température 22 intégrées dans le boîtier 10, à savoir une sonde de température 22-1 supérieure, affleurant sur la face supérieure 10-1 du boîtier et une sonde de température 22-2 inférieure, disposée sous la sonde de température 22-1 supérieure, en l'occurrence dans le choix retenu, à 4 cm. Ces sondes de température 22 sont également en un matériau résistant à la corrosion, notamment en milieu salin.

Le capteur selon la présente invention comprend un générateur de signaux 24, signaux qui peuvent être modulés en forme, fréquence et amplitude. Ce générateur de signaux 24 est programmé pour émettre des signaux donnés à des intervalles de temps donnés. Le générateur de signaux est lui-même relié à un circuit de mesure 24-1.

Le capteur selon la présente invention est équipé d'une source d'énergie 26 qui peut être une pile avec une durée de fonctionnement de l'ordre d'au moins 10 ans et dotée d'une charge initiale suffisante pour assurer le bon fonctionnement du capteur selon la présente invention dont la consommation est très fortement minimisée comme cela sera compris à la lecture du procédé de mise en œuvre. Cette source d'énergie 26 peut aussi être un accu, rechargeable par un panneau photovoltaïque, ledit panneau étant intégré dans la face supérieure 10-1 du boîtier 10. Cette source d'énergie peut aussi être un accu, rechargeable par l'énergie issue des vibrations générées par le passage de véhicules et convertie en énergie électrique. Cette source d'énergie peut aussi être un accu, rechargeable par l'énergie issue d'actions mécaniques exercées par le passage de véhicules et également convertie en énergie électrique.

Le générateur de signaux 24 et son circuit de mesure 24-1, les sondes de température 22, les électrodes 12 et l'émetteur 23-1 sont reliés à une interface INT. Cette interface INT inclut notamment la programmation des actions de mesure et le pilotage du générateur de signaux 24.

Selon la présente invention, le procédé de mise en oeuvre vise à limiter de façon très importante la consommation d'énergie électrique. A cet effet, le procédé selon la présente invention consiste à travailler en mesure de tension. Ainsi, lorsqu'une mesure est requise, une tension est émise avec une forme, une fréquence et une amplitude données par le générateur de signal. Le signal émis est modifié par la présence ou non de glace, d'eau ou de givre et/ou de sel. On peut donc mesurer la capacité parasite induite par la présence de glace, d'eau ou de givre et/ou de taux de sel. En fonction de la forme de la fréquence et de l'amplitude du signal émis, des variations induites par la présence de glace, d'eau ou de givre et/ou de sel, en comparaison avec des abaques associés, on détermine différents paramètres à l'aide de ces deux seules électrodes. Il est ainsi possible de déterminer l'épaisseur de la couche d'eau, de glace ou de givre sur le capteur selon l'invention et donc sur la chaussée car les valeurs des capacités initiales et celles induites par les facteurs eau, glace, givre, sel s'additionnent si bien que l'on peut mesurer de façon proportionnelle les différents paramètres, notamment épaisseur de glace, d'eau et/ou le taux de sel.

Le procédé selon la présente invention conduit donc à des consommations qui sont extrêmement limitées car en veille le capteur selon la présente invention consomme de l'ordre du pico ampère et une mesure est de l'ordre de 250mA. Aussi, si l'on imagine effectuer une mesure toutes les 6 minutes, cela représente des durées de service de l'ordre d'au moins 10 ans avec les sources d'énergie actuellement disponibles. De plus, le travail de comparaison et d'analyse des signaux est effectué hors capteur si bien que l'énergie de traitement des données n'est pas imputée au capteur et évite ainsi une consommation inutile d'énergie localement.

Le procédé selon la présente invention est tout à fait prédictif puisque la température est mesurée et la quantité d'eau présente ainsi que le taux de sel de cette eau le sont aussi. Il est donc possible de déterminer si les conditions présentes peuvent induire un phénomène dangereux de givrage ou de formation de glace. Les taux d'humidité de l'air, le vent, sa direction sont mesurés par ailleurs et peuvent être concaténés avec les mesures in situ pour améliorer et affiner les prédictions et les calculs mathématiques associés.

Afin de conserver les valeurs des mesures sans dérives parasites dues à l'encrassement dudit capteur, le capteur comporte des moyens 28 d'auto nettoyage de la face supérieure mais surtout des électrodes et des sondes de mesure de température. A cet effet, les moyens 28 d'auto nettoyage sont disposés sur la face supérieure 12-1 du capteur et comprennent avantageusement des plots 28-1, répartis sur ladite surface supérieure 12-1. La surface cumulée de ces plots est comprise entre 30% et 40% de la surface de la face supérieure 12-1. De façon avantageuse toujours, les plots sont de forme générale cylindrique à arêtes chanfreinées ou portant un congé périphérique, ceci pour des raisons évidentes de résistance mécaniques aux impacts des roues des véhicules et d'orientation non privilégiée. De plus, on constate que chaque capteur pouvant être positionné sans aucune orientation angulaire dans le plan de la surface de la chaussée, la pose est grandement facilitée. Les plots ont avantageusement une hauteur limitée de quelques millimètres de façon que la partie supérieure desdits plots se situe dans le plan supérieure des granulats constituant ladite chaussée. L'étalonnage de la mesure de l'épaisseur d'eau, de la glace, du givre doit alors prendre en compte cette accumulation d'eau inter granulats. Les mesures reflètent alors exactement les conditions réelles de roulage. Il est aussi possible de prévoir des rainures mais alors, la pose doit tenir compte d'une certaine orientation desdites rainures pour que celles-ci soient par exemple perpendiculaires à la direction générale de déplacement des véhicules sur la chaussée.

Le fonctionnement desdits moyens 28 d'auto nettoyage, visible sur la figure 3, est lié à la pression exercée par les pneus P des véhicules qui se déforment entre les plots pour venir exercer une pression dans les zones entre lesdits plots, ce qui chasse l'eau accumulée lorsqu'il y en a, avec une pression aussi puissante qu'instantanée si bien que cette pression agit comme la buse d'un nettoyeur haute-pression, dans le plan de la surface supérieure du capteur, ceci avec autant de cycles qu'il y a présence d'eau et de passages de véhicules. De plus, dans le cas présent, si les plots sont disposés de façon sensiblement symétrique, les courants de fuite fluidiques sont répartis du centre du capteur vers la périphérie, de façon sensiblement radiale, sur 360°, même si les pressions exercées sont bien sûr différentes suivant la direction.

Pour la mise en oeuvre du procédé, il est nécessaire d'implanter un dispositif dans une surface, en l'occurrence dans une chaussée destinée à recevoir des véhicules. Un trou est usiné avec une scie cloche dans la chaussée de façon à ménager un trou de profondeur et de diamètre légèrement supérieurs aux valeurs nominales du capteur 10. Le diamètre étant avantageusement standard, une cloche du commerce peut être utilisée. Les vis 18 sont dévissées ou vissées pour positionner la surface supérieure 10-1 dans le plan de la chaussée dans laquelle il est encastré de façon qu'il n'y ait pas d'accumulation d'eau sur ladite face 10-1 supérieure mais que celle-ci ne soit pas non plus en saillie, à la merci d'une usure prématurée liée au passage des véhicules. Il subsiste alors un volume périphérique et sous la face inférieure 10-2 qui est comblé par une résine de scellement de manière à immobiliser le capteur 10. On constate que les vis ne perturbent aucunement le remplissage du volume par la résine de scellement qui diffuse dans ledit volume, car il n'y a aucun gabarit de pose à la surface comme dans les dispositifs de l'art antérieur. Une fois la résine polymérisée, le capteur est parfaitement maintenu dans le trou borgne et on constate qu'il ne subsiste aucune partie en saillie ou en creux et aucun filetage pour fixer un outil de pose par exemple. Dans le cas de la présence de moyens 28 d'auto nettoyage, la surface supérieure des plots constituant lesdits moyens 28 d'auto nettoyage doit être positionnée dans le plan supérieur de la chaussée, c'est-à-dire dans le plan incluant les sommets des granulats constituant ladite chaussée.

## Revendications

1. Dispositif de mesure de paramètres d'une chaussée réalisée à partir de granulats, pour en déterminer l'état, comprenant un capteur C mesurant des data, comportant un boîtier (10) configuré pour être intégré dans la chaussée, de forme cylindrique avec une face supérieure (10-1), une face inférieure (10-2) et une paroi périphérique (10-3), la face supérieure comportant deux électrodes (12-1;12-2), affleurantes avec la face supérieure (10-1), générant un espace inter-électrodes (14) et comportant des moyens de transmission (20) sans fil, de façon à pouvoir transférer lesdites data du capteur C sous forme numérique, le capteur C étant **caractérisé en ce qu'**il comporte des moyens (28) d'auto nettoyage disposés sur la face supérieure (10-1) du boitier (10), comprenant des plots (28-1), répartis sur ladite surface supérieure (12-1).

2. Dispositif de mesure de paramètres d'une chaussée pour en déterminer l'état selon la revendication 1, **caractérisé en ce que** ces moyens de transmission (20) comprennent un émetteur (20-1) et un récepteur (20-2) déporté et situé dans la zone de réception des signaux dudit émetteur (20-1), ledit récepteur (20-2) étant apte à transférer lesdites data vers un poste de traitement et de centralisation des données.

3. Dispositif de mesure de paramètres d'une chaussée pour en déterminer l'état selon la revendication 1 ou 2, **caractérisé en ce que** le capteur C comporte des sondes de température (22) intégrées dans le boîtier (10), à savoir une sonde de température (22-1) supérieure, affleurant sur la face supérieure (10-1) du boîtier et une sonde de température (22-2) inférieure, disposée sous la sonde de température (22-1) supérieure.

4. Dispositif de mesure de paramètres d'une chaussée pour en déterminer l'état selon la revendication 1, 2 ou 3, **caractérisé en ce qu'**il comprend un générateur de signaux (24), pouvant être modulés en forme, fréquence et amplitude.

5. Dispositif de mesure de paramètres d'une chaussée pour en déterminer l'état selon la revendication 4, **caractérisé en ce que** le générateur de signaux (24) est programmé pour émettre des signaux donnés à des intervalles de temps donnés et ce générateur de signaux est relié à un circuit de mesure (24-1).

6. Dispositif de mesure de paramètres d'une chaussée pour en déterminer l'état selon la revendication 4 ou 5, **caractérisé en ce que** le générateur de signaux (24) et son circuit de mesure (24-1), les sondes de température (22), les électrodes (12) et l'émetteur (20-1) sont reliés à une interface INT, incluant la programmation des actions de mesure et le pilotage du générateur de signaux.

7. Dispositif de mesure de paramètres d'une chaussée pour en déterminer l'état selon l'une quelconque des revendications précédentes, **caractérisé en ce que** la face inférieure (10-2) du boîtier (10) porte des moyens (16) de réglages de l'assise du boitier (10) du capteur C.

8. Dispositif de mesure de paramètres d'une chaussée pour en déterminer l'état selon la revendication 7, **caractérisé en ce que** ces moyens de réglage de l'assise comprennent des vis (18) dont l'écrou est noyé dans la résine du boîtier (10), les vis (18) étant apparentes et manœuvrables de l'extérieur afin de faire plus ou moins saillie en dessous de ladite face inférieure (10-2).

9. Dispositif de mesure de paramètres d'une chaussée pour en déterminer l'état selon l'une des revendications précédentes, **caractérisé en ce que** la surface cumulée de ces plots (28-1) est comprise entre 30% et 40% de la surface de la face supérieure (12-1) du boîtier (10).

10. Dispositif de mesure de paramètres d'une chaussée pour en déterminer l'état selon l'une des revendications précédentes, **caractérisé en ce que** les plots (28-1) sont de forme générale cylindrique, à arêtes chanfreinées ou portant un congé périphérique et une hauteur limitée de quelques millimètres de façon que la partie supérieure desdits plots (28-1) se situe dans le plan supérieure des granulats constituant ladite chaussée.

11. Procédé de pilotage du dispositif de mesure de paramètres d'une chaussée pour en déterminer l'état, selon l'une quelconque des revendications 4 à 10, **caractérisé en ce qu'**il consiste à travailler en tension avec une forme, une fréquence et une amplitude donnée par le générateur de signal (24).

12. Procédé de pilotage selon la revendication 11, **caractérisé en ce que**, lorsqu'une mesure est requise, une tension est émise, avec une forme, une fréquence et une amplitude données par le générateur de signal (24), le signal émis avec une fréquence et une amplitude est modifié par la présence ou non de glace, d'eau ou de givre et/ou de sel, on mesure la capacité parasite induite par la présence de glace, d'eau ou de givre et/ou de taux de sel et, en fonction de la forme de la fréquence et de l'amplitude du signal émis, on compare les mesures des variations induites par la présence de glace, d'eau ou de givre et/ou de sel, en comparaison avec des abaques associés.

## Patentansprüche

1. Vorrichtung zum Messen von Parametern einer Fahrbahn, die aus Korngemischen hergestellt ist, zum Bestimmen ihres Zustands, umfassend einen Sensor C, der Daten misst, die ein Gehäuse (10), das in die Fahrbahn integriert ist, in Zylinderform mit einer oberen Seite (10-1), einer unteren Seite (10-2) und einer Umfangswand (10-3) aufweist, **dadurch gekennzeichnet, dass** die obere Seite 2 Elektroden (12-1; 12-2) aufweist, die mit der oberen Seite (10-1) bündig sind, die einen Zwischenelektrodenraum (14) erzeugen und Mittel (20) zum drahtlosen Übertragen aufweisen, um die Daten des Sensors C in digitaler Form übermitteln zu können, wobei der Sensor C Mittel (28) zum automatischen Reinigen aufweist, die auf der oberen Seite (10-1) des Gehäuses (10) angeordnet sind, vorteilhafterweise Stifte (28-1) umfassend, die über die obere Oberfläche (12-1) verteilt sind.

2. Vorrichtung zum Messen von Parametern einer Fahrbahn zum Bestimmen ihres Zustands nach Anspruch 1, **dadurch gekennzeichnet, dass** diese Übertragungsmittel (20) einen Sender (20-1) und einen Empfänger (20-2) umfassen, der entfernt und in dem Signalempfangsgebiet des Senders (20-1) gelegen ist, wobei der Empfänger (20-2) geeignet ist, die Daten an eine Datenverarbeitungs- und Zentralisierungsstation zu übermitteln.

3. Vorrichtung zum Messen von Parametern einer Fahrbahn zum Bestimmen ihres Zustands nach Anspruch 1 oder 2, **dadurch gekennzeichnet, dass** der Sensor C Temperatursonden (22) aufweist, die in das Gehäuse (10) integriert sind, nämlich eine obere Temperatursonde (22-1), die mit der oberen Seite (10-1) des Gehäuses bündig ist, und einen unteren Temperatursensor (22-2), der unter dem oberen Temperatursensor (22-1) angeordnet ist.

4. Vorrichtung zum Messen von Parametern einer Fahrbahn zum Bestimmen ihres Zustands nach Anspruch 1, 2 oder 3, **dadurch gekennzeichnet, dass** sie einen Generator (24) von Signalen umfasst, die in Form, Frequenz und Amplitude modulierbar sind.

5. Vorrichtung zum Messen von Parametern einer Fahrbahn zum Bestimmen ihres Zustands nach Anspruch 4, **dadurch gekennzeichnet, dass** der Signalgenerator (24) zum Senden von gegebenen Signalen in gegebenen Zeitabständen programmiert ist, und dass dieser Signalgenerator mit einer Messschaltung (24-1) verbunden ist.

6. Vorrichtung zum Messen von Parametern einer Fahrbahn zum Bestimmen ihres Zustands nach Anspruch 4 oder 5, **dadurch gekennzeichnet, dass** der Signalgenerator (24) und seine Messschaltung (24-1), die Temperatursonden (22), die Elektroden (12) und der Sender (20-1) mit einer Schnittstelle INT verbunden sind, einschließlich der Programmierung der Messtätigkeiten und der Steuerung des Signalgenerators.

7. Vorrichtung zum Messen von Parametern einer Fahrbahn zum Bestimmen ihres Zustands nach einem der vorstehenden Ansprüche, **dadurch gekennzeichnet, dass** die untere Seite (10-2) des Gehäuses (10) Mittel (16) zum Einstellen des Sitzes des Gehäuses (10) des Sensors C trägt.

8. Vorrichtung zum Messen von Parametern einer Fahrbahn zum Bestimmen ihres Zustands nach Anspruch 7, **dadurch gekennzeichnet, dass** diese Mittel zum Einstellen des Sitzes Schrauben (18) umfassen, deren Mutter in das Harz des Gehäuses 10 eingebettet ist, wobei die Schrauben (18) von außen sichtbar und manövrierbar sind, um unterhalb der unteren Seite (10-2) mehr oder weniger überzustehen.

9. Vorrichtung zum Messen von Parametern einer Fahrbahn zum Bestimmen ihres Zustands nach einem der vorstehenden Ansprüche, **dadurch gekennzeichnet, dass** die Gesamtoberfläche dieser Stifte (28-1) zwischen 30 % und 40 % der Oberfläche der oberen Seite (12-1) des Gehäuses (10) beträgt.

10. Vorrichtung zum Messen von Parametern einer Fahrbahn zum Bestimmen ihres Zustands nach einem der vorstehenden Ansprüche, **dadurch gekennzeichnet, dass** die Stifte (28-1) im Allgemeinen eine Zylinderform mit abgeschrägten oder eine Umfangsausrundung tragenden Kanten und eine Höhe besitzen, die auf einige Millimeter begrenzt ist, damit der obere Teil der Stifte (28-1) in der oberen Ebene der Korngemische gelegen ist, die die Fahrbahn ausbilden.

11. Verfahren zum Steuern der Vorrichtung zum Messen von Parametern einer Fahrbahn zum Bestimmen ihres Zustands nach einem der Ansprüche 4 bis 10, **dadurch gekennzeichnet, dass** es darin besteht, unter Spannung mit einer Form, einer Frequenz und einer Amplitude zu arbeiten, die durch den Signalgenerator (24) gegeben sind.

12. Steuerverfahren nach Anspruch 11, **dadurch gekennzeichnet, dass,** wenn eine Messung erforderlich ist, eine Spannung mit einer Form, einer Frequenz und einer Amplitude gesendet wird, die durch den Signalgenerator (24) gegeben sind, wobei das Signal mit einer Frequenz und einer Amplitude gesendet wird, die durch das Vorhandensein oder nicht von Eis, Wasser oder Reif und/oder Salz modifiziert wird, die parasitäre Kapazität, die durch das Vorhandensein von Eis, Wasser oder Reif und/oder einem Salzpegel induziert wird, und abhängig von der Form, der Frequenz und der Amplitude des gesendeten Signals gemessen wird, die Messungen der Schwankungen, die durch das Vorhandensein von Eis, Wasser oder Reif und/oder Salz induziert werden, im Vergleich zu zugeordneten Diagrammen verglichen werden.

## Claims

1. Device for measuring parameters of a road made from aggregates in order to determine its condition, comprising a sensor C which measures data and has a housing (10) which is integrated into the pavement and has a cylindrical shape with an upper face (10-1), a lower face (10-2) and a peripheral wall (10-3), **characterized in that** the upper face comprises two electrodes (12-1; 12-2) which are flush with the upper face (10- 1), generate an inter-electrode space (14) and have wireless transmission means (20) so as to be able to transfer said data from the sensor C in digital form, the sensor C having automatic cleaning means (28) which are arranged on the upper face (10-1) of the housing (10) and advantageously comprise pads (28-1) which are distributed over said upper surface (12-1).

2. Device for measuring parameters of a road in order to determine its condition according to claim 1, **characterized in that** these transmission means (20) comprise a transmitter (20-1) and a remote receiver (20-2) which is located in the signal receiving zone of said transmitter (20-1), said receiver (20-2) being capable of transferring said data to a data processing and centralization station.

3. Device for measuring parameters of a road in order to determine its condition according to either claim 1 or claim 2, **characterized in that** the sensor C has temperature sensors (22) which are integrated in the housing (10), namely an upper temperature sensor (22-1) which is flush with the upper face (10-1) of the housing and a lower temperature sensor (22-2) which is arranged under the upper temperature sensor (22-1).

4. Device for measuring parameters of a road in order to determine its condition according to any of claims 1, 2 or 3, **characterized in that** it comprises a signal generator (24), the signals of which can be modulated in shape, frequency and amplitude.

5. Device for measuring parameters of a road in order to determine its condition according to claim 4, **characterized in that** the signal generator (24) is programmed to emit specific signals at specific time intervals and this signal generator is connected to a measuring circuit (24-1).

6. Device for measuring parameters of a road in order to determine its condition according to either claim 4 or claim 5, **characterized in that** the signal generator (24) and its measuring circuit (24-1), the temperature sensors (22), the electrodes (12) and the transmitter (20-1) are connected to an interface INT which includes the programming of measuring actions and the control of the signal generator.

7. Device for measuring parameters of a road in order to determine its condition according to any of the preceding claims, **characterized in that** the lower face (10-2) of the housing (10) supports means (16) for adjusting the base of the housing (10) of the sensor C.

8. Device for measuring parameters of a road in order to determine its condition according to claim 7, **characterized in that** these base adjustment means comprise screws (18), the nut of which is embedded in the resin of the housing 10, the screws (18) being visible and maneuverable from the outside to project more or less below said lower face (10-2).

9. Device for measuring parameters of a road in order to determine its condition according to any of the preceding claims, **characterized in that** the cumulative surface of these pads (28-1) is between 30% and 40% of the surface of the upper face (12-1) of the housing (10).

10. Device for measuring parameters of a road in order to determine its condition according to any of the preceding claims, **characterized in that** the pads (28-1) have a general cylindrical shape which has chamfered edges or a peripheral recess and a height limited to a few millimeters so that the upper part of said pads (28-1) is located in the upper plane of the aggregates constituting said road.

11. Method for controlling the device for measuring parameters of a road in order to determine its condition according to any of claims 4 to 10, **characterized in that** said method consists in working in voltage with a shape, a frequency and an amplitude specified by the signal generator (24).

12. Control method according to claim 11, **characterized in that**, when a measurement is required, a voltage with a shape, a frequency and an amplitude specified by the signal generator (24) is emitted, the signal emitted with a frequency and an amplitude is modified by the presence or absence of ice, water or frost and/or salt, the stray capacitance induced by the presence of ice, water or frost and/or salt content is measured and, depending on the shape of the frequency and the amplitude of the emitted signal, the measurements of the variations induced by the presence of ice, water or frost and/or salt are compared in comparison with associated charts.
